# EUROPÄISCHE PATENTSCHRIFT

(11) **EP 3 420 121 B1**
(45) Veröffentlichungstag und Bekanntmachung des Hinweises auf die Patenterteilung: **21.06.2023**
(21) Anmeldenummer: 16709713.8
(22) Anmeldetag: 24.02.2016
(51) Int. Cl.: C23F 13/08, B32B 15/01, C09D 5/10, C09D 127/18, C09D 167/02

(54) **HALBZEUG, DESSEN HERSTELLUNGSVERFAHREN SOWIE VERWENDUNG**
SEMIFINISHED PRODUCT, METHOD OF PRODUCTION AND USE THEREOF
DEMI-PRODUIT, SON PROCÉDÉ DE FABRICATION ET SON UTILISATION

(43) Veröffentlichungstag der Anmeldung: 02.01.2019
(73) Patentinhaber: Evonik Operations GmbH, 45128 Essen (DE)
(72) Erfinder: FERKEL, Hans, 45478 Mülheim (DE); LEWE, Tobias, 48147 Münster (DE); RUDACK, Markus, 52076 Aachen (DE); WERNER, Bettina, 58239 Schwerte (DE); BRAND, Thorsten, 45772 Marl (DE); MOHR, Thomas, 45721 Haltern am See (DE); NUMRICH, Uwe, 64846 Gross-Zimmern (DE); PUKROP, Denis, 48249 Dülmen (DE)
(74) Vertreter: Evonik Patent Association
(86) Internationale Anmeldenummer: PCT/EP2016/053810
(87) Internationale Veröffentlichungsnummer: WO 2017/144088

(56) Entgegenhaltungen:
- EP-A1- 2 626 394
- DE-A1-102013 204 395
- JP-A- 2002 309 170
- JP-A- 2011 012 119
- US-A1- 2014 308 448
- US-A1- 2015 314 567

## Beschreibung

Die vorliegende Erfindung betrifft ein Halbzeug mit einer hochwertigen sowie witterungsbeständigen Beschichtung und sehr gutem Korrosionsschutz. Grundlegend hierbei ist die Kombination einer "Langlebigkeit unter ästhetischen Gesichtspunkten", verbunden mit den klassischen Kriterien eines leistungsfähigen Korrosionsschutzes.

Eine durch die Witterung verursachte Beanspruchung ist bei Materialien im Außeneinsatz nicht zu vermeiden. Verursacht wird eine solche Beanspruchung insbesondere durch den UV-Anteil der Solarstrahlung, über unterschiedlichste Korrosionsmechanismen, durch Reinigungsprozesse, mit dem Wind getragene Medien (Sand, Staub) oder weiteren entsprechenden Beanspruchungen im spezifischen Anwendungsfall. Ungeschützte bzw. unzureichend oberflächenvergütete Materialien verlieren hierdurch ihre Wertigkeit bzw. Dauerhaftigkeit. Metallsubstrat-basierende Materialien unterliegen zudem einem beträchtlichen Korrosionspotential, wodurch dem Korrosionsschutzaspekt der erfinderischen Beschichtung eine besondere Bedeutung zukommt.

Der bekannteste Stand der Technik zur korrosions- sowie wetterfesten Coil-Coating Oberflächenvergütung und -dekoration wird mit sog. PVDF-Lacken praktiziert, welche jedoch deutliche designtechnische Nachteile aufweisen, da ausschließlich der Mittelglanzbereich (25 - 35 Glanzeinheiten, gemessen im Gardner-Test bei 60°) realisiert werden kann. Ferner weisen derartige Beschichtungen eine vergleichsweise niedrige Oberflächenhärte auf. Des Weiteren offenbaren EP 2 626 394 A1 und JP 2011 012 119 A Halbzeuge mit einer Polymerbeschichtung. Die Aufgabe der vorliegenden Erfindung liegt in der Bereitstellung verbesserter Halbzeuge, die idealerweise einen nachhaltigen Korrosionsschutz ermöglichen, als farbgebende Beschichtungen bzw. Dekoration eingesetzt werden können, eine designgerechte Oberflächengestaltung (Hochglanz, Mittelglanz, Matt) erlauben und eine nachhaltige Oberflächenvergütung ermöglichen.

Mit diesen oberflächenveredelten Halbzeugen soll somit bei anspruchsvollen Innen- sowie, im Besonderen, Außenanwendungen gleichzeitig eine besonders gute Oberflächenhärte (Abrasionsbeständigkeit, Kratzfestigkeit), Witterungsbeständigkeit und

Substratschutzeigenschaften sowie einem ausgezeichneten Korrosionsschutz gewährleistet werden.

Darüber hinaus soll die Oberflächenveredelung einfach und kosteneffizient herzustellen und aufzubringen sein.

Weitere nicht explizit genannte Aufgaben können sich aus der Beschreibung, den Ansprüchen oder auch den Beispielen dieser Anmeldung ergeben.

Vor dem Hintergrund des Standes der Technik und der dort beschriebenen nur mangelhaften technischen Lösung, gelingt es in der vorliegenden Erfindung auf eine für den Fachmann nicht ohne weiteres absehbare Weise, eine Beschichtung mit über einen langen Zeitraum verbesserter Qualität bereitzustellen und damit das oben genannte komplexe Anforderungsprofil zu erfüllen.

Wesentlich bei der vorliegenden Erfindung ist die Darstellung eines Halbzeugs, die das oben genannte komplexe Anforderungsprofil erfüllen auch selbst dann, wenn durch Be- und Verarbeitung oder Beschädigung zumindest bereichsweise ein erhöhtes Korrosionspotenzial gegeben ist.

Somit ist ein erster Gegenstand der vorliegenden Erfindung ein Halbzeug mit einer metallischen Kernschicht bzw. einem metallischen Substrat und einer Polymer-Beschichtung mit einer Formulierung umfassend 5 bis 70 Gew.-% hydroxyfunktionelle Fluorpolymere, 5 bis 70 Gew.-% Polyester auf Basis von (i) aliphatischen oder cycloaliphatischen Dicarbonsäuren oder Polycarbonsäuren oder deren Derivaten und (ii) aliphatischen oder cycloaliphatischen Di- oder Polyolen, wobei der Anteil der aliphatischen oder cycloaliphatischen Dicarbonsäuren oder Polycarbonsäuren oder deren Derivaten in dem Säureanteil der Polyester 100 Mol-% beträgt, bezogen auf die Summe aller Di-oder Polycarbonsäuren, 2 bis 25 Gew.-% Vernetzer, 0,01 bis 2 Gew.-% Vernetzungskatalysatoren, bis zu 20 Gew.-% UV-Absorber und bis zu 10 Gew.-% UV-Stabilisatoren; und dadurch gekennzeichnet, dass die Kernschicht mit einer metallischen Korrosionsschutzschicht versehen ist, und dass die metallische Korrosionsschutzschicht einen kathodischen Korrosionsschutz gegenüber der Kernschicht aufweist.

Die metallische Kernschicht umfasst in einer bevorzugten Ausführungsform zumindest eine Lage aus Stahl. Die Kernschicht weist ein Dicke im Bereich von 0,2mm bis 4mm, insbesondere 0,25mm bis 1,5mm auf. Alternativ kann die Kernschicht auch ein mehrlagiger Verbundwerkstoff bspw. in Art eines Sandwiches mit außen liegenden metallischen Lagen und einer dazwischen angeordneten Lage aus einem Polymer oder auch ein rein metallischer Verbundwerkstoff sein.

Die metallische Korrosionsschutzschicht ist derart ausgebildet, dass sie gegenüber der Kernschicht einen kathodischen Korrosionsschutz gewährleistet. Hierzu umfasst die Korrosionsschutzschicht Elemente, die unedler als die Kernschicht sind, also in der elektrochemischen Spannungsreihe ein niedrigeres Potential aufweisen.

In bevorzugten Ausführungsformen weist die Korrosionsschutzschicht Zink (Zn), Zinn (Sn), Aluminium (Al), Magnesium (Mg) oder deren Legierungen auf. Beispiele für diesbezügliche Legierungen sind Zink-Aluminium, wie mit den unter Galfan (ca. 95%Zn und 5%Al) sowie Galvalume (ca. 55%Af, 43-45%Zn und 1-2%Si) bekannten Zusammensetzungen, oder Zink-Magnesium.

Die Dicke der Korrosionsschutzschicht liegt im Bereich von 1µm bis 200µm, bevorzugt im Bereich von 5µm bis 100µm, besonders bevorzugt im Bereich vom 10µm bis 50µm.

in einer bevorzugten Ausführungsform der vorliegenden Erfindung machen die Fluorpolymere und die Polyester in Summe vorzugsweise 20 bis 75 Gew.-% der Formulierung aus.

Die Gewichtsangaben der einzelnen Bestandteile der erfindungsgemäßen Formulierungen können im Rahmen der vorab genannten Grenzen frei variiert werden, unter der Bedingung, dass sich in Summe 100 Gew.-% ergeben.

Die mittels der erfindungsgemäßen Formulierungen hergestellten Beschichtungen zeichnen sich durch eine nachhaltige Barriere gegenüber korrosiven Medien, eine hohe Beständigkeit gegenüber Witterungs- und Erosionseinflüssen, eine ausreichende Elastizität bei Knick- und Biegebeanspruchung und eine chemische Beständigkeit gegenüber Reinigungsmitteln sowie Graffiti-Entfernern aus. Darüber hinaus weisen die Beschichtungen auf Basis der erfindungsgemäßen Formulierungen einen schmutzabweisenden Charakter, ein günstiges Kosten/Nutzen-Verhältnis und eine genügende Opazität bzw. Deckfähigkeit im Falle einer farbgebenden Beschichtung in niedrigen Beschichtungsstärken, d. h. sie zeigen eine sehr gute Pigmentdispersität. Mit diesen Beschichtungen lässt sich somit eine nachhaltige Oberflächenvergütung erzielen, und dies bei hoher Designvielfalt, beispielsweise durch die Möglichkeit der Herstellung von sowohl hochglänzenden, mittelglänzenden als auch matten Oberflächenausprägungen.

Ebenfalls bei der Verwendung von lackierten Metalloberflächen im Inneneinsatz, im besonderen "Weiße Ware" betreffend (Herde, Kühlschränke, Waschmaschinen, Spülmaschinen etc.) bewirkt die erfindungsgemäße Oberflächenvergütung, aufgrund ihrer Korrosionsschutzeigenschaften, der hohen Lichtstabilität sowie der ausgeprägten Oberflächenhärte einen attraktiven Nutzen.

Die erfindungsgemäß beschichteten Halbzeuge weisen somit folgende Vorteile gegenüber dem Stand der Technik auf:
Die erfindungsgemäßen Beschichtungen sind farb- und glanzbeständig und trüben sich bei Feuchtigkeitseinfluss nicht ein. Die Beschichtung zeigt zudem eine ausgezeichnete Witterungsbeständigkeit und eine sehr gute Chemikalienbeständigkeit, beispielsweise gegen sämtliche handelsübliche Reinigungsmittel. Auch diese Aspekte tragen zum Erhalt der Oberflächengüte über einen langen Zeitraum bei.

Dabei haben die erfindungsgemäßen Beschichtungen vor allem unter mechanischer Belastung der Oberfläche sehr gute Eigenschaften. Dies verlängert die Lebensdauer der Halbzeuge auch in Regionen mit regelmäßigen Sandstürmen bzw. stark staubhaltigen Winden oder bei regelmäßiger Bürstenreinigung der Oberfläche.

Darüber hinaus ist die erfindungsgemäße Beschichtung besonders feuchtigkeitsstabil, insbesondere gegenüber Regenwasser, Luftfeuchtigkeit oder Tau. Somit zeigt dieser nicht die bekannte Anfälligkeit für Delamination der Beschichtung von dem Halbzeug unter Feuchtigkeitseinfluss. Darüber hinaus weist die erfindungsgemäße Beschichtung eine besonders gute Barrierewirkung gegenüber Wasser und Sauerstoff auf und hat damit sehr gute Eigenschaften bezüglich eines nachhaltigen Korrosionsschutzes.

Weiterhin weisen die erfindungsgemäßen Beschichtungen eine sehr gute Oberflächenhärte auf, so dass dieser Effekt zusätzlich zur Langlebigkeit entsprechend ausgerüsteter Halbzeuge beiträgt.

Der weitere besondere Vorteil der vorliegenden Erfindung liegt in der Gewährleistung und Aufrechterhaltung eines sehr guten Korrosionsschutzes selbst bei Beschädigung der äußeren Polymer-Beschichtung oder des kompletten Schichtaufbaus während des Gebrauchs. So ist beispielsweise bei der Verarbeitung des erfindungsgemäßen Halbzeugs trotz der Einbringung von Bohrungen an den Kanten der Bohrung, an denen die Kernschicht frei liegt, auch weiterhin ein sehr guter Korrosionsschutz gegeben.

Wesentlicher Bestandteil der Polymer-Beschichtung sind die hydroxyfunktionellen Fluorpolymere. Hierbei handelt es sich um spezielle Copolymere, welche auf Struktureinheiten eines fluorierten Polymers sowie zumindest einer weiteren Struktureinheit, welche sich von der Struktureinheit eines fluorierten Polymers unterscheidet, basieren. Bei den in den erfindungsgemäßen Formulierungen eingesetzten hydroxyfunktionellen Fluorpolymeren handelt es sich insbesondere bevorzugt um Copolymere von Tetrafluorethylen (TFE) und/oder Chlortrifluorethylen (CTFE) einerseits und Vinylestern, Vinylethern und/oder alpha-Olefinen andererseits oder entsprechende Mischungen. in solchen Polymeren wird die Hydroxyfunktionalität beispielsweise unter Copolymerisation von hydroxyfunktionellen Vinylethern und/oder alpha-Olefinen erhalten. Beispiele für erfindungsgemäß geeignete hydroxyfunktionelle Fluorpolymere sind die kommerziell erhältlichen Produkte von der Firma Asahi Glass Chemicals unter dem Produktnamen Lumiflon^{®}, von der Firma Daikin unter dem Produktnamen Zeffle^{®}, von der Firma Central Glass Co. unter den Produktnamen Cefral Coat^{®} und Cefral Soft^{®}, von der Firma Qingdao Hongfen Group Co. unter dem Produktnamen HFS-F-3000 sowie von der Firma Xuzhou Zhongyan Fluoro Chemical Co. unter dem Produktnamen ZY-2.

Ein weiterer Bestandteil der Polymer-Beschichtung sind die enthaltenen Polyester.

Die in der Polymer-Beschichtung enthaltenen Polyester basieren auf aliphatischen oder cycloaliphatischen Di- oder Polycarbonsäuren und aliphatischen oder cycloaliphatischen Di-oder Polyolen.

Die eingesetzten Polyester enthalten als Ausgangssäurekomponente mindestens eine aliphatische oder cycloaliphatische Dicarbonsäure oder Polycarbonsäure oder deren Derivate, wie z. B. cycloaliphatische 1,2-Dicarbonsäuren, wie z. B. 1,2 Cyclohexandicarbonsäure oder Methyltetrahydro-, Tetrahydro- oder Methylhexahydrophthalsäure, Bernsteinsäure, Sebazinsäure, Undecandisäure, Dodecandisäure, Adipinsäure, Azelainsäure, Pyromellitsäure, Trimellitsäure, Isononansäure und/oder Dimerfettsäure .

Darüber hinaus kann der eingesetzte Polyester optional neben den aliphatischen oder cycloaliphatischen Dicarbonsäuren oder Polycarbonsäuren oder deren Derivate weitere, beispielsweise aromatische, Dicarbonsäuren oder Polycarbonsäuren enthalten. Beispiele geeigneter aromatischer Säuren sind Phthalsäure, Isophthalsäure oder Terephthalsäure. Der Anteil der aliphatischen oder cycloaliphatischen Dicarbonsäuren oder Polycarbonsäuren in dem Säureanteil der erfindungsgemäß eingesetzten Polyester beträgt bezogen auf die Summe aller Di- oder Polycarbonsäuren 100 Mol-%, das heißt der Polyester basiert ausschließlich auf aliphatischen oder cycloaliphatischen Dicarbonsäuren oder Polycarbonsäuren oder deren Derivaten.

Im Rahmen der vorliegenden Anmeldung werden unter dem Begriff Derivate der Dicarbonsäure oder Polycarbonsäure vorzugsweise die jeweiligen Anhydride oder Ester, insbesondere Methylester oder Ethylester, verstanden.

Bei den Di- oder Polyolen handelt es sich um aliphatische oder cycloaliphatische Diole oder Polyole, wie beispielsweise Monoethylenglykol, Diethylen-, Dipropylen-, Triethylen-, Tetraethylenglykol, 1,3-Propandiol, 1,2-Propandiol, 1,4-Butandiol, 1,5-Pentandiol, 1,6-Hexandiol, 1,9-Nonandiol, 1,12-Dodecandiol, 1,3-Butylethylpropandiol, 2-Methyl-1,3-propandiol, Cyclohexandimethanol oder Neopentylglykol. Weiterhin kann es sich um oligomere Diole wie Oligoethylenglykol, Oligopropylenglykol und weitere Oligoether handeln

Auch Polyole mit mehr als zwei funktionellen Gruppen, wie beispielsweise Trimethylolethan, Trimethylolpropan, Pentaerythrol oder Glycerin können eingesetzt werden. Außerdem können Lactone und Hydroxycarbonsäuren als Di- oder Polyole verwendet werden.

Bevorzugt werden beispielsweise 1,3-Methylpropandiol, 2,2'-Dimethylpropan-1,3-diol, Neopentylglykol, Ethylenglykol, 1,6-Hexandiol und/oder Trimethylolpropan als aliphatische oder cycloaliphatische Di- oder Polyole eingesetzt.

Die in der Polymer-Beschichtung eingesetzten Polyester weisen vorzugsweise eine Säurezahl, bestimmt nach DIN EN ISO 2114, zwischen 0 und 10 mg KOH/g, vorzugsweise 0 bis 5 mg KOH/g, insbesondere 0 bis 3 mg KOH/g auf. Unter der Säurezahl (SZ) versteht man diejenige Menge Kaliumhydroxid in mg, die zur Neutralisation der in einem Gramm Substanz enthaltenen Säuren erforderlich ist. Die zu untersuchende Probe wird in Dichlormethan gelöst und mit 0,1 N ethanolischer Kalilauge gegen Phenolphthalein titriert.

Die in der Polymer-Beschichtung eingesetzten Polyester weisen eine OH-Zahl zwischen 15 bis 150 mg KOH/g, bevorzugt zwischen 20 und 100 mg KOH/g.

Im Rahmen der vorliegenden Anmeldung erfolgt die Bestimmung der OH-Zahlen nach DIN 53240-2. Bei diesem Verfahren wird die Probe mit Essigsäureanhydrid in Gegenwart von 4 Dimethylaminopyridin als Katalysator umgesetzt, wobei die Hydroxylgruppen acetyliert werden. Dabei entsteht pro Hydroxylgruppe ein Molekül Essigsäure, während die anschließende Hydrolyse des überschüssigen Essigsäureanhydrids zwei Moleküle Essigsäure liefert. Der Verbrauch an Essigsäure wird titrimetrisch aus der Differenz zwischen Hauptwert und einem parallel durchzuführenden Blindwert ermittelt.

Die resultierenden zahlengemittelten Molekulargewichte Mn liegen von 1000 bis 10000 g/mol, vorzugsweise bei 2000 bis 7000 g/mol.

Das Molekulargewicht wird im Rahmen der vorliegenden Erfindung bestimmt mittels Gelpermeationschromatographie (GPC). Die Charakterisierung der Proben erfolgte in Tetrahydrofuran als Eluent nach DIN 55672-1.
Mn (UV) = Zahlenmittleres Molgewicht (GPC, UV-Detektion), Angabe in g / mol
Mw (UV) = Massenmittleres Molgewicht (GPC, UV-Detektion), Angabe in g / mol.

Die eingesetzten Polyester werden nach bekannten Verfahren (siehe Dr. P. Oldring, Resins for Surface Coatings, Volume III, veröffentlicht von Sita Technology, 203 Gardiness House, Bromhill Road, London SW 184JQ, England 1987) durch (halb)kontinuierliche oder diskontinuierliche Veresterung der Ausgangssäuren und -alkohole in einstufiger oder mehrstufiger Fahrweise hergestellt.

Die Synthese der Polyester erfolgt bevorzugt über eine Schmelzekondensation. Hierzu werden die vorab genannten Di- oder Polycarbonsäuren und Di- oder Polyole im Äquivalentverhältnis von Hydroxyl- zu Carboxylgruppen von 0.5 bis 1.5, bevorzugt 1.0 bis 1.3, vorgelegt und aufgeschmolzen. Die Polykondensation erfolgt in der Schmelze bei Temperaturen zwischen 150 und 280 °C innerhalb von 3 bis 30 h, bevorzugt in einer Inertgasatmosphäre. Als Inertgas können Stickstoff oder Edelgase, insbesondere Stickstoff eingesetzt werden. Das Inertgas weist einen Sauerstoffgehalt von weniger als 50 ppm, insbesondere weniger als 20 ppm, auf. Dabei wird zunächst ein Großteil der freiwerdenden Wassermenge bei Normaldruck abdestilliert. Im weiteren Verlauf wird das übrige Reaktionswasser sowie leicht flüchtige Diole abgespalten, bis das angestrebte Molekulargewicht erreicht ist. Gegebenenfalls kann dies durch verminderten Druck, eine Vergrößerung der Oberfläche oder durch Durchleiten eines inerten Gasstroms erleichtert werden. Die Reaktion kann zusätzlich durch Zugabe eines Schleppmittels und/oder eines Katalysators vor oder während der Reaktion beschleunigt werden. Geeignete Schleppmittel sind beispielsweise Toluol und Xylole. Typische Katalysatoren sind Organotitan- oderzinnverbindungen wie Tetrabutyltitanat oder Dibutylzinnoxid. Denkbar sind auch Katalysatoren, die auf anderen Metallen wie z. B. Zink oder Antimon basieren, sowie metallfreie Veresterungskatalysatoren. Weiterhin sind weitere Additive und Fahrhilfsmittel wie Antioxidantien oder Farbstabilisatoren möglich.

Beispiele für geeignete hydroxyfunktionelle Copolyester sind die kommerziell erhältlichen Produkte der Firma Evonik Industries AG, DYNAPOL^{®} LH 748-02/B oder DYNAPOL^{®} LH 750-28

in einer weiterhin bevorzugten Ausführungsform weisen die Fluorpolymere und die Polyester zusammen eine OH-Zahl zwischen 20 und 350 mg KOH/g, bevorzugt zwischen 30 und 250 mg KOH/g auf.

Ein weiterer Bestandteil der Polymer-Beschichtung sind Vernetzer, bspw. Aminoharze oder Polyisocyanate sowie Mischungen hieraus.

Im Falle von Polyisocyanaten handelt es sich vorzugsweise um Isophorondiisocyanat (IPDI), Hexamethylendiisocyanat (HDI), Diisocyanatodicyclohexylmethan (H12MDI), 2-Methylpentandiisocyanat (MPDI), 2,2,4-Trimethylhexamethylendiisocyanat/2,4,4-Trimethylhexamethylendiisocyanat (TMDI) und/oder Norbornandiisocyanat (NBDI) einschließlich blockierter Derivate hiervon.

Beispiele für einen geeigneten solchen Vernetzer ist Vestanat^{®} EP B 1581 der Firma Evonik Industries AG sowie Desmodur^{®} BL 3175 der Firma Bayer. In der Regel wird die Vernetzermenge dergestalt eingestellt, dass das Verhältnis zwischen den OH-Gruppen der Bindemittelmischung, also insbesondere des hydroxyfunktionellen Fluorpolymers und des Polyesters, und den NCO-Gruppen des Polyisocyanats im Bereich von 0,5 bis 1,5, bevorzugt zwischen 0,8 und 1,2 und besonders bevorzugt zwischen 0,9 und 1,1 liegt. Die vorab genannten Verhältnisbereiche gelten insbesondere für die ganz besonders bevorzugte Kombination von Hexamethylendiisocyanat (HDI) als Polyisocyanat und Dibutylzinndilaurat (DBTDL) als Vernetzungskatalysator. Bei anderen Systemen, deren Komponenten in Bezug auf die jeweiligen Molekulargewichte oder Zahl der Funktionalitäten deutlicher abweichen, sind die angegebenen Grenzbereiche in fachmännischer Weise entsprechend anzupassen.

Ebenfalls Bestandteil der Polymer-Beschichtung sind Vernetzungskatalysatoren. Als Vernetzungskatalysator werden normalerweise Zinn- sowie Wismut-organische Verbindungen, wie Dibutylzinndilaurat (DBTDL), oder Bismuthneodecanoat verwendet. Darüber hinaus werden ebenfalls tertiäre Amine, wie 1,4-Diazabicylco[2.2.2.]octan, sowie nichtoxidierende organische Säuren, wie zum Beispiel Para-toluolsulfonsäure, verwendet.

Als weiteren wichtigen Parameter zur Einstellung der gewünschten, ästhetisch wirksamen Witterungsstabilität sowie Substratschutzeigenschaften der Beschichtung enthält die Formulierung der Polymer-Beschichtung bis zu 20 Gew.-%, bevorzugt bis zu 15 Gew.-% UV-Absorber, vorzugsweise eines Triazin-basierenden UV-Absorbers und bis zu 10 Gew.-%, bevorzugt bis zu 7,5 Gew.-%, UV-Stabilisatoren, vorzugsweise eines HALS-basierenden UV-Stabilisators.

In einer besonders bevorzugten Ausführungsform enthält die Polymer-Beschichtung 0,5 bis 15 Gew.- % eines Triazin-basierenden UV-Absorbers sowie 0,3 bis 7,5 Gew.-% eines HALS-basierenden UV-Stabilisators.

Die Formulierungen für die Polymer-Beschichtung können in der vorab beschriebenen Form direkt eingesetzt werden. So können die Formulierungen in Form von Powder-Coating-Beschichtungen, also lösemittelfrei, eingesetzt werden. Dies ist für den vielfach bevorzugten Einsatz von Pulverlackbeschichtungen von besonderem Interesse.

Darüber hinaus können die Formulierungen auch in Form von Lösemittel-haltigen Beschichtungen eingesetzt werden. In dieser ebenfalls bevorzugten Ausführungsform enthalten die Formulierungen 5 bis 80 Gew.-%, bevorzugt bis 50 Gew.-%, bezogen auf die Formulierung, eines Lösungsmittels.

Als für die Formulierungen geeignete Lösungsmittel kommen im Prinzip alle Lösungsmittel bzw. Lösungsmittelgemische in Frage, die kompatibel zu den anderen erfindungsgemäß eingesetzten Komponenten sind. Hierbei handelt es sich vorzugsweise um Ketone wie Aceton oder Methylethylketon, Ester wie Ethyl-, Propyl- oder Butylacetat, Aromaten wie Toluol oder Xylol oder Ether wie Diethylether oder Ethyl-ethoxy-propionat, Glycolether und - ester sowie hochsiedende aromatische Fluide, wie Solvesso^{®} 150 der Firma ExxonMobil Chemicals.

Weiterhin kann die Polymer-Beschichtung zusätzlich bis zu 40 Gew.-%, bezogen auf die Formulierung, eines hydroxyfunktionellen Silikonharzes enthalten. Dieses Silikonharz weist eine OH-Zahl zwischen 50 und 300 mg KOH/g, bevorzugt zwischen 90 und 200 mg KOH/g auf. Mit solchen Silikonharzen wird die Wärmebeständigkeit der Formulierung zusätzlich erhöht. Weiterhin lässt sich bei einem höheren Anteil dieser Komponente bei gleichzeitig etwas geringerem Anteil der anderen Polymerkomponenten der Feststoffgehalt der Formulierung insgesamt erhöhen. Ein Beispiel für solche hydroxyfunktionellen Silikonharze ist XIAMETER^{®} RSN-0255 der Firma Dow Corning.

Weiterhin kann die Formulierung der Polymer-Beschichtung zusätzlich noch bis zu 20 Gew.-%, bezogen auf die Formulierung, eines silanfunktionellen Alkylisocyanats oder eines glycidylfunktionellen Alkylsilans enthalten. Diese Komponenten tragen in der Regel zusätzlich zu den Haftungseigenschaften bzw. zur Erhöhung der Kratz- und Abriebbeständigkeit gegenüber dem zu beschichtenden Halbzeug bei. Ein bevorzugtes silanfunktionelles Alkylisocyanat ist Trimethoxy-propyl-silyl-isocyanat, welches beispielsweise von der Firma Evonik Industries AG unter dem Namen Vestanat^{®} EP-M 95 vertrieben wird. Ein bevorzugtes Beispiel für ein glycidylfunktionelles Alkylsilan ist 3-Glycidyloxypropyltrimethoxysilan, welches beispielsweise von der Firma Evonik Industries AG unter dem Namen Dynasylan^{®} GLYMO erhältlich ist.

Darüber hinaus können insbesondere auch anorganische Partikel, optional nanoskalig, vorwiegend zum Zwecke der Pigmentierung sowie zur zusätzlichen Verbesserung der Kratz-und Abriebfestigkeit, in der Formulierung enthalten sein. Dabei können bis zu 40 Gew.-%, bevorzugt bis zu 30 Gew.-% dieser Partikel, bezogen auf die Formulierung, zugesetzt sein. Ebenso ist es möglich, zur Farbgebung entsprechende Farbmittel, beispielsweise organische und/oder anorganische Pigmente oder Farbstoffe der Formulierung hinzuzufügen.

Zur Einstellung der Glanzeigenschaften können zusätzlich auch Mattierungsmittel in der Formulierung enthalten sein. Als Mattierungsmittel können beispielsweise Kieselsäuren (z. B. Acematt^{®} der Fa. Evonik Resource Efficiency GmbH), Silikate, aber auch Polyamidfeinpulver (z. B. Vestosint* der Fa. Evonik Resource Efficiency GmbH) oder Copolymerisate eingesetzt werden.

Dabei weist die Polymer-Beschichtung nach Applikation auf das jeweilige Substratmaterial bzw. Halbzeug sowie anschließender Trocknung und Vernetzung bevorzugt eine Dicke zwischen 0,5 und 200 µm, bevorzugt zwischen 2 µm und 150 µm und besonders bevorzugt zwischen 5 µm und 50 µm auf.

Bei der Auswahl der metallischen Kernschicht bzw. Substrat gibt es grundsätzlich keine Beschränkungen. Als Metalle eignen sich vor allem alle dem Fachmann bekannten Arten von Stahl, aber auch Aluminium und sonstige Metalle oder Legierungen, die aus Korrosionsschutzgründen mit einer Beschichtung versehen werden.

Neben den bereits beschriebenen Beschichtungen sind auch Verfahren zur Herstellung von Halbzeugen Gegenstand der vorliegenden Erfindung.

In dem erfindungsgemäßen Verfahren zur Beschichtung eines Halbzeugs wird das Halbzeug zunächst bereitgestellt (A: Bereitstellen einer metallischen Kernschicht), anschließend wird es mit einer metallischen Korrosionsschutzschicht versehen (B: Beschichten der Kernschicht mit einer metallischen Korrosionsschutzschicht) und anschließend mit einer Polymer-Beschichtung mit einer zuvor beschriebenen Formulierung beschichtet (C: Aufbringen einer Polymer-Beschichtung mit einer Formulierung wie oben beschrieben) und die Beschichtung anschließend getrocknet und/oder kalziniert (D: anschließende Trocknung und/oder Kalzinierung der Polymer-Beschichtung). Dabei vernetzen die Formulierungsbestandteile zu der Polymer-Beschichtung.

Das Aufbringen der metallischen Korrosionsschutzschicht erfolgt bevorzugt mittels eines Schmelztauchverfahrens, auch Feuerbeschichtung genannt, oder durch ein elektrolytisches bzw. galvanisches Beschichtungsverfahren.

In alternativen Ausführungen kann die metallische Korrosionsschutzschicht auch mittels Plattieren, bspw. Walzplattieren, PVD- oder CVD-Verfahren erfolgen.

Optional kann nach dem Aufbringen der metallischen Korrosionsschutzschicht eine Wärmebehandlung erfolgen, um die Struktur der Korrosionsschutzschicht und/oder deren Anbindung an die Kernschicht bspw. durch Diffusionsvorgänge zu verbessern.

Vor der Aufbringung der Polymer-Beschichtung kann optional die Oberfläche der Korrosionsschutzschicht vorbehandelt werden.

In Bezug auf das Verfahren zur Beschichtung von Halbzeugen mit der Polymer-Beschichtung gibt es mehrere Ausführungsformen. In der einfachsten Ausführungsform erfolgt die Beschichtung direkt auf die Korrosionsschutzschicht. Hierzu wird insbesondere ein Verfahren verwendet, in dem die Formulierung in organischer Lösung gemeinsam mit weiteren Formulierungsbestandteilen als "Organosol" auf das Substrat aufgetragen und die aufgetragene Schicht anschließend getrocknet wird. Dabei erfolgt die Beschichtung beispielsweise mittels Knife Coating, Roll Coating, Dip Coating, Curtain Coating, Spray Coating. Während des Trocknens erfolgt parallel die Vernetzung der Beschichtung.

in einer besonders bevorzugten, jedoch nicht ausschließlichen, Variante der genannten Beschichtungsvariante der vorliegenden Anmeldung werden die Formulierungen im Rahmen von Bandbeschichtungsprozessen, auch Coil-Coating genannt, eingesetzt. Coil Coating ist ein Verfahren zur ein- oder beidseitigen Beschichtung von flachen beispielsweise Stahl- oder Aluminium-Bändern. Das resultierende Material ist ein Verbundwerkstoff aus einem metallischen Trägermaterial umfassend eine Kernschicht und Korrosionsschutzschicht, optional vorbehandelt, und einer organischen Polymer-Beschichtung. Verfahren und Ausführungsformen von Coil-Coating-Prozessen sind dem Fachmann bekannt.

In einer zweiten Ausführungsform wird die Polymer-Beschichtung in Form einer, mit der Coating-Formulierung ausgerüsteten Oberflächenvergütungsfolie auf das jeweilige Substratmaterial bzw. Halbzeug realisiert. Hierbei erfolgt zunächst die haftfeste Beschichtung der Coating-Formulierung auf ein entsprechendes Folien-Substratmaterial. Die Applikation dieser Oberflächenvergütungsfolie auf das jeweilige Endsubstratmaterial erfolgt anschließend. Dabei ist die Unterseite der Oberflächenvergütungsfolie entweder mit einer selbstklebenden Kleberformulierung beschichtet, mit einem Hotmelt oder mit einer Adhäsivschicht ausgerüstet. Diese Modifikation der Unterseite bindet bei einer temperatur- und druckunterstützten Applikation auf dem Endsubstratmaterial an.

Über die Materialeigenschaften der Oberflächenvergütungsfolie können auf diese Weise weitere Produktmerkmale, z. B. auch optischer Natur, realisiert werden. Außerdem ist ein solches Verfahren sehr flexibel, z. B. bei größeren zu beschichtenden Halbzeugen, vor Ort ohne Handhabung von Lösungsmitteln oder hohen Temperaturen anwendbar.

In einer dritten, der zweiten Ausführungsform ähnlichen Variante, wird die Polymer-Beschichtung in Form eines Thermotransfer-Prozesses der Coating-Formulierung auf das jeweilige Substratmaterial realisiert.

Hierbei wird ein entsprechendes Folien- oder Papier-Trägermaterial in einem ersten Beschichtungsschritt mit einer Releaseschicht ausgerüstet, welche einen Thermo-Transfer der, in einem zweiten Beschichtungsschritt applizierten, Coating-Formulierung auf das jeweilige Substratmaterial ermöglicht.

Optional kann hierbei, falls notwendig, in einem dritten Beschichtungsschritt eine Adhäsivschicht appliziert werden, welche eine sachgerechte Haftung des Thermotransfer-Schichtenaufbaus auf dem jeweiligen Substratmaterial gewährleistet.

Eine vierte Ausführungsform repräsentiert die Lösungsmittel-freie Pulverlackbeschichtung. Geeignete Verfahren und Ausführungsformen diesbezüglich sind dem Fachmann hinlänglich bekannt.

Die Polymer-Beschichtung kann anschließend optional mit einer oder mehreren weiteren funktionellen Schichten versehen werden. Dabei kann es sich beispielsweise um eine Kratzfestbeschichtung, eine leitfähige Schicht, eine Antisoiling-Beschichtung und/oder um eine reflektionserhöhende Schicht oder anderen optisch funktionelle Schichten handeln. Diese zusätzlichen Schichten können beispielsweise mittels Physical Vapour Deposition (PVD) oder Chemical Vapour Deposition (CVD) aufgebracht werden.

Eine zusätzliche Kratzfestbeschichtung kann optional zur weiteren Verbesserung der Kratzfestigkeit aufgetragen werden. Bei Kratzfestbeschichtungen kann es sich z. B. um Siliziumoxid-Schichten handeln, die direkt mittels PVD oder CVD aufgetragen werden.

Die Oberfläche der Verbundformkörper kann darüber hinaus, um die Reinigung zu erleichtern, mit einer schmutzabweisenden bzw. schmutzzerstörenden Beschichtung, einer so genannten Antisoiling-Beschichtung, ausgestattet sein. Auch diese Beschichtung kann mittels PVD oder CVD appliziert werden.

Als weitere beispielhafte Option befindet sich auf der Polymer-Beschichtung zusätzlich eine weitere, vergleichsweise dünne, extrem abriebfeste Schicht. Hierbei handelt es sich um eine besonders harte duroplastische Schicht mit einer Dicke bevorzugt unter 5 µm, besonders bevorzugt zwischen 0,5 und 2,0 µm. Beispielsweise kann diese Schicht aus einer Polysilazan-Formulierung hergestellt werden.

Anwendungsgebiete für die erfindungsgemäßen Halbzeuge sind insbesondere in der Architektur zur kreativen Fassaden- und Dachflächengestaltung und der Oberflächenvergütung sowie Designgebung/Gestaltung von Metallstrukturen. Dies gilt insbesondere in hochbeanspruchten Außenanwendungen, wie beispielsweise Sport-Stadien, Fabrik/Industrieanlagen-Strukturen, Brückenbau, Transportwesen, Marineanwendungen etc. Allerdings auch für Innenanwendungen können die Vorteile genutzt werden. Weitere Einsatzgebiete für die Verwendung erfindungsgemäßer Halbzeuge liegen im Fahrzeugbau, wobei hiermit insbesondere neben Personen- und Nutzfahrzeuge ebenfalls Schiffs- sowie Flugzeugbau und Sonderfahrzeuge umfasst sind. Ein weiteres Verwendungsgebiet erfindungsgemäßer Halbzeuge liegt im Bereich der Emballagen, da vor allem hinsichtlich der Verpackung von Lebensmittel die Vorteile zum Tragen kommen. Grundlegend hierbei ist die Kombination einer "Langlebigkeit unter ästhetischen Gesichtspunkten", verbunden mit den klassischen Kriterien eines leistungsfähigen Korrosionsschutzes. In einer weiteren bevorzugten Ausführungsform handelt es sich bei den Metallstrukturen um Bestandteile von Haushaltsgeräten (weiße Ware), insbesondere von Herden, Kühlschränken, Waschmaschinen oder Spülmaschinen.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keinesfalls als in irgendeiner Weise limitierende Offenbarung aufzufassen.

Alternative Ausführungsformen der vorliegenden Erfindung sind in analoger Weise erhältlich.

### Beispiele:

Beispiele 3, 4, 7 und 8 sind erfindungsgemäße Beispiele.

Beispiele 1, 2, 5 und 6 sind Referenzbeispiele.

Untersuchungen zur Verträglichkeit von Polyestern und Fluorpolymeren:

| **Beispiel** | **Polyester** | **Verhältnis Polyester : Lumiflon LF 200F** | | |
|---|---|---|---|---|
| | | 20 : 80 | 50 : 50 | 80 : 20 |
| **Beispiel 1** | P1 | extrem trüb | extrem trüb | extrem trüb |
| **Beispiel 2** | P2 | extrem trüb | extrem trüb | extrem trüb |
| **Beispiel 3** | P3 | klar | minimale Trübung | klar |
| **Beispiel 4** | P4 | klar | klar | klar |

| | | | | |
|---|---|---|---|---|
| P1: Dynapol LH 744-23, Evonik Industries AG, Polyester auf Basis von 45 Mol-% aliphatischer Dicarbonsäure P2: Dynapol LH 538-02, Evonik Industries AG, Polyester auf Basis von 50 Mol-% aliphatischer Dicarbonsäure sowie cycloaliphatischem Dicarbonsäureanhydrid P3: Dynapol LH 748-02/B, Evonik Industries AG, Polyester auf Basis von 100 Mol-% cycloaliphatischem Dicarbonsäureanhydrid P4: Dynapol LH 750-28, Evonik Industries AG, Polyester auf Basis von 100 Mol-% cycloaliphatischem Dicarbonsäureanhydrid Die angegebenen molaren Konzentrationen nehmen jeweils Bezug auf den Säureanteil des betreffenden Polyesters Lumiflon LF 200, Asahi Glass Chemicals, hydroxyfunktionelles Fluorpolymer, auf FEVE (Fluorethylenvinylether)-Basis | | | | |

| **Beispiel** | **Polyester** | **Verhältnis Polyester: Lumiflon LF 916F** | | |
|---|---|---|---|---|
| | | 20 : 80 | 50 : 50 | 80 : 20 |
| **Beispiel 5** | P1 | extrem trüb | extrem trüb | extrem trüb |
| **Beispiel 6** | P2 | klar | klar | extrem trüb |
| **Beispiel 7** | P3 | klar | klar | klar |
| **Beispiel 8** | P4 | klar | klar | klar |

| | | | | |
|---|---|---|---|---|
| Lumiflon LF 916F, Asahi Glass Chemicals, hydroxyfunktionelles Fluorpolymer, auf Fluorethylenvinylether (FEVE) Basis. | | | | |

Ausreichend gute Verträglichkeit mit der Fluorpolymer-Polyolkomponente Lumiflon LF besitzen vor allem die Polyester P3 und P4, die allein auf aliphatischen Dicarbonsäuren bzw. entsprechenden Derivate basieren.

## Patentansprüche

1. Halbzeug, wobei das Halbzeug
(a) eine metallische Kernschicht umfasst; und
(b) eine Polymer-Beschichtung aufweist mit einer Formulierung umfassend
- 5 bis 70 Gew.-% hydroxyfunktionelle Fluorpolymere,
- 5 bis 70 Gew.-% Polyester auf Basis von (i) aliphatischen oder cycloaliphatischen Dicarbonsäuren oder Polycarbonsäuren oder deren Derivaten und (ii) aliphatischen oder cycloaliphatischen Di- oder Polyolen,
wobei der Anteil der aliphatischen oder cycloaliphatischen Dicarbonsäuren oder Polycarbonsäuren oder deren Derivaten in dem Säureanteil der Polyester 100 Mol-% beträgt, bezogen auf die Summe aller Di- oder Polycarbonsäuren,
- 2 bis 25 Gew.-% Vernetzer,
- 0,01 bis 2 Gew.-% Vernetzungskatalysatoren,
- bis zu 20 Gew.-% UV-Absorber und
- bis zu 10 Gew.-% UV-Stabilisatoren; und
(c) **dadurch gekennzeichnet ist, dass** die Kernschicht mit einer metallischen Korrosionsschutzschicht versehen ist, und dass die metallische Korrosionsschutzschicht einen kathodischen Korrosionsschutz gegenüber der Kernschicht aufweist.

2. Halbzeug gemäß Anspruch 1, **dadurch gekennzeichnet, dass** die Kernschicht mindestens eine Lage aus Stahl umfasst.

3. Halbzeug nach Anspruch 1 oder 2, **dadurch gekennzeichnet, dass** die metallische Korrosionsschutzschicht Zink, Aluminium, Zinn, Magnesium oder deren Legierungen umfasst.

4. Halbzeug nach einem der Ansprüche 1 bis 3, **dadurch gekennzeichnet, dass** die Kernschicht eine Dicke von 0,2 mm bis 4 mm und die Polymer-Beschichtung nach Trocknung und Vernetzung eine Dicke zwischen 0,5 und 200 µm aufweist.

5. Halbzeug nach einem der Ansprüche 1 bis 4, **dadurch gekennzeichnet, dass** die metallische Korrosionsschutzschicht eine Dicke von 1 µm bis 200 µm aufweist.

6. Halbzeug nach einem der Ansprüche 1 bis 5, **dadurch gekennzeichnet, dass** die Polymer-Beschichtung organische und/oder anorganische Pigmente oder Farbstoffe enthält.

7. Verfahren zur Beschichtung eines Halbzeugs umfassend die Verfahrensschritte:
A) Bereitstellen einer metallischen Kernschicht,
B) Beschichten der metallischen Kernschicht mit einer metallischen Korrosionsschutzschicht,
C) Aufbringen einer Polymer-Beschichtung mit einer Formulierung umfassend
- 5 bis 70 Gew.-% hydroxyfunktionelle Fluorpolymere,
- 5 bis 70 Gew.-% Polyester auf Basis von (i) aliphatischen oder cycloaliphatischen Dicarbonsäuren oder Polycarbonsäuren oder deren Derivaten und (ii) aliphatischen oder cycloaliphatischen Di- oder Polyolen,
wobei der Anteil der aliphatischen oder cycloaliphatischen Dicarbonsäuren oder Polycarbonsäuren oder deren Derivaten in dem Säureanteil der Polyester 100 Mol-% beträgt, bezogen auf die Summe aller Di- oder Polycarbonsäuren,
- 2 bis 25 Gew.-% Vernetzer,
- 0,01 bis 2 Gew.-% Vernetzungskatalysatoren,
- bis zu 20 Gew.-% UV-Absorber und
- bis zu 10 Gew.-% UV-Stabilisatoren,
D) und anschließende Trocknung und/oder Kalzinierung der Polymer-Beschichtung.

8. Verfahren gemäß Anspruch 7, **dadurch gekennzeichnet, dass** nach dem Aufbringen der Korrosionsschutzschicht (Schritt B) und dem Aufbringen der Polymer-Beschichtung (Schritt C) eine Wärmebehandlung durchgeführt wird.

9. Verfahren gemäß Anspruch 7 oder 8, **dadurch gekennzeichnet, dass** die erhaltene Beschichtung zusätzlich mit einer weiteren Kratzfestbeschichtung, leitfähigen Schicht, Antisoiling-Beschichtung und/oder reflektionserhöhenden Schichten oder anderen optisch funktionellen Schichten versehen wird.

10. Verwendung eines Halbzeugs gemäß einem der Ansprüche 1 bis 6 im Fahrzeugbau, für Emballagen, für Haushaltsgeräte oder im Baubereich zur Fassaden- und Dachflächengestaltung, im Innenausbau und der Oberflächenvergütung sowie Designgebung/Gestaltung von weiteren Metallstrukturen.

## Claims

1. Semifinished product, where the semifinished product
(a) comprises a metallic core layer; and
(b) has a polymer coating with a formulation comprising
- from 5 to 70% by weight of hydroxy-functional fluoropolymers,
- from 5 to 70% by weight of polyesters based on (i) aliphatic or cycloaliphatic dicarboxylic acids or polycarboxylic acids or derivatives of these and (ii) aliphatic or cycloaliphatic di-or polyols,
where the proportion of the aliphatic or cycloaliphatic dicarboxylic acids or polycarboxylic acids or derivatives thereof in the acid component of the polyesters is 100 mol%, based on the sum total of all di- or polycarboxylic acids,
- from 2 to 25% by weight of crosslinking agents,
- from 0.01 to 2% by weight of crosslinking catalysts,
- up to 20% by weight of UV absorbers and
- up to 10% by weight of UV stabilizers; and
(c) is **characterized in that** a metallic anticorrosion layer has been provided to the core layer, and that the metallic anticorrosion layer exhibits cathodic protection from corrosion in respect of the core layer.

2. Semifinished product according to Claim 1, **characterized in that** the core layer comprises at least one layer made of steel.

3. Semifinished product according to Claim 1 or 2, **characterized in that** the metallic anticorrosion layer comprises zinc, aluminium, tin, magnesium or alloys of these.

4. Semifinished product according to any of Claims 1 to 3, **characterized in that** the thickness of the core layer is from 0.2 mm to 4 mm and the thickness of the polymer coating, after drying and crosslinking, is from 0.5 to 200 µm.

5. Semifinished product according to any of Claims 1 to 4, **characterized in that** the thickness of the metallic anticorrosion layer is from 1 µm to 200 µm.

6. Semifinished product according to any of Claims 1 to 5, **characterized in that** the polymer coating comprises organic and/or inorganic pigments or dyes.

7. Process for the coating of a semifinished product comprising the steps of:
A) provision of a metallic core layer,
B) coating of the metallic core layer with a metallic anticorrosion layer,
C) application of a polymer coating with a formulation comprising
- from 5 to 70% by weight of hydroxy-functional fluoropolymers,
- from 5 to 70% by weight of polyesters based on (i) aliphatic or cycloaliphatic dicarboxylic acids or polycarboxylic acids or derivatives of these and (ii) aliphatic or cycloaliphatic di- or polyols,
where the proportion of the aliphatic or cycloaliphatic dicarboxylic acids or polycarboxylic acids or derivatives thereof in the acid component of the polyesters is 100 mol%, based on the sum total of all di-or polycarboxylic acids,
- from 2 to 25% by weight of crosslinking agents,
- from 0.01 to 2% by weight of crosslinking catalysts,
- up to 20% by weight of UV absorbers and
- up to 10% by weight of UV stabilizers;
D) and subsequent drying and/or calcination of the polymer coating.

8. Process according to Claim 7, **characterized in that** after the application of the anticorrosion layer (step B) and the application of the polymer coating (step C) a heat-treatment is carried out.

9. Process according to Claim 7 or 8, **characterized in that** the resultant coating is provided together with a further scratch-resistant coating, conductive layer, antisoiling coating and/or reflection-increasing layers or other optically functional layers.

10. Use of a semifinished product according to any of Claims 1 to 6 in vehicle construction, for packaging, for household equipment or in the construction sector for the construction of facades and of roofs, in the fitting-out of interiors and surface-finishing, and also in the design/construction of other metal structures.

## Revendications

1. Produit semi-fini, le produit semi-fini
(a) comprenant une couche de noyau métallique ; et
(b) présentant un revêtement de polymère doté d'une formulation comprenant
- 5 à 70 % en poids de fluoropolymères fonctionnalisés par hydroxy,
- 5 à 70 % en poids de polyesters à base de (i) acides dicarboxyliques ou poly(acide carboxylique) aliphatiques ou cycloaliphatiques ou leurs dérivés et (ii) diols ou polyols aliphatiques ou cycloaliphatiques,
la proportion des acides dicarboxyliques ou poly(acide carboxylique) aliphatiques ou cycloaliphatiques ou de leurs dérivés dans la partie acide des polyesters étant de 100 % en moles, par rapport à la somme de tous les acides dicarboxyliques ou poly(acide carboxylique),
- 2 à 25 % en poids d'agents de réticulation,
- 0,01 à 2 % en poids de catalyseurs de réticulation,
- jusqu'à 20 % en poids d'absorbants UV et
- jusqu'à 10 % en poids de stabilisants UV ; et
(c) étant **caractérisé en ce que** la couche de noyau est pourvue d'une couche métallique de protection contre la corrosion, et **en ce que** la couche métallique de protection contre la corrosion présente une protection contre la corrosion cathodique vis-à-vis de la couche de noyau.

2. Produit semi-fini selon la revendication 1, **caractérisé en ce que** la couche de noyau comprend au moins une couche d'acier.

3. Produit semi-fini selon la revendication 1 ou 2, **caractérisé en ce que** la couche métallique de protection contre la corrosion comprend du zinc, de l'aluminium, de l'étain, du magnésium ou leurs alliages.

4. Produit semi-fini selon l'une quelconque des revendications 1 à 3, **caractérisé en ce que** la couche de noyau présente une épaisseur de 0,2 mm à 4 mm et le revêtement de polymère présente une épaisseur, après séchage et réticulation, comprise entre 0,5 et 200 µm.

5. Produit semi-fini selon l'une quelconque des revendications 1 à 4, **caractérisé en ce que** la couche métallique de protection contre la corrosion présente une épaisseur de 1 µm à 200 µm.

6. Produit semi-fini selon l'une quelconque des revendications 1 à 5, **caractérisé en ce que** le revêtement de polymère contient des pigments ou colorants organiques et/ou inorganiques.

7. Procédé de revêtement d'un produit semi-fini comprenant les étapes de procédé de :
A) mise à disposition d'une couche de noyau métallique,
B) revêtement de la couche de noyau métallique par une couche métallique de protection contre la corrosion,
C) application d'un revêtement de polymère doté d'une formulation comprenant
- 5 à 70 % en poids de fluoropolymères fonctionnalisés par hydroxy,
- 5 à 70 % en poids de polyesters à base de (i) acides dicarboxyliques ou poly(acide carboxylique) aliphatiques ou cycloaliphatiques ou leurs dérivés et (ii) diols ou polyols aliphatiques ou cycloaliphatiques,
la proportion des acides dicarboxyliques ou poly(acide carboxylique) aliphatiques ou cycloaliphatiques ou de leurs dérivés dans la partie acide des polyesters étant de 100 % en moles, par rapport à la somme de tous les acides dicarboxyliques ou poly(acide carboxylique),
- 2 à 25 % en poids d'agents de réticulation,
- 0,01 à 2 % en poids de catalyseurs de réticulation,
- jusqu'à 20 % en poids d'absorbants UV et
- jusqu'à 10 % en poids de stabilisants UV
D) et séchage et/ou calcination ultérieur(e) du revêtement de polymère.

8. Procédé selon la revendication 7, **caractérisé en ce qu'**après l'application de la couche de protection contre la corrosion (étape B) et l'application du revêtement de polymère (étape C), un traitement thermique est réalisé.

9. Procédé selon la revendication 7 ou 8, **caractérisé en ce que** le revêtement obtenu est de plus pourvu d'un revêtement antirayures, d'une couche conductrice, d'un revêtement antisalissures et/ou de couches augmentant la réflexion supplémentaire(s) ou d'autres couches optiquement fonctionnelles.

10. Utilisation d'un produit semi-fini selon l'une quelconque des revendications 1 à 6 dans la construction automobile, pour des emballages, pour des appareils ménagers ou dans la construction pour l'aménagement de façades ou de surfaces de toit, dans l'aménagement intérieur et l'amélioration de surfaces ainsi que dans le design/l'aménagement d'autres structures métalliques.
